# EUROPÄISCHE PATENTSCHRIFT

(11) **EP 2 842 689 B1**
(45) Veröffentlichungstag und Bekanntmachung des Hinweises auf die Patenterteilung: **08.07.2015**
(21) Anmeldenummer: 13182729.7
(22) Anmeldetag: 03.09.2013
(51) Int. Cl.: B24B 27/00, B25J 11/00, B24D 9/08

(54) **Vorrichtung und Verfahren zum Austauschen einer Schleifscheibe**
Device and method for replacing a grinding wheel
Dispositif et procédé de remplacement d'une meule

(43) Veröffentlichungstag der Anmeldung: 04.03.2015
(73) Patentinhaber: Asis GmbH, 84036 Landshut (DE)
(72) Erfinder: Multhammer, Hans-Jürgen, 84036 Landshut (DE)
(74) Vertreter: Wunderlich, Rainer

(56) Entgegenhaltungen:
- EP-A1- 2 153 938
- DE-U1-202013 101 858
- US-A- 3 808 753
- US-A- 5 123 216
- US-A- 5 231 803

## Beschreibung

Die vorliegende Erfindung betrifft nach Anspruch 1 eine Schleifanlage mit einer Schleifmaschine und einer Vorrichtung zum Austauschen einer Schleifscheibe, welche an einer Kopfplatte der Schleifmaschine lösbar angebracht ist. In einem weiteren Aspekt bezieht sich die Erfindung gemäß Anspruch 11 auf ein Verfahren zum Austauschen einer Schleifscheibe, die an einer Kopfplatte einer Schleifmaschine lösbar angebracht ist.

Schleifmaschinen werden zum Bearbeiten verschiedener Materialen eingesetzt. Ein bedeutsames Anwendungsgebiet ist die Automobilfertigung.

Schleifscheiben haben eine raue Oberfläche, welche verhältnismäßig schnell abgenutzt ist. Daher stellen Schleifscheiben Verbrauchsteile dar, die regelmäßig auszutauschen sind. Zu diesem Zweck ist eine Schleifscheibe üblicherweise lösbar an einer Kopfplatte der Schleifmaschine befestigt.

Ein Austausch einer benutzten Schleifscheibe erfolgt meist manuell. Um den Arbeitsaufwand zu reduzieren, werden spezielle Werkzeuge zum Lösen einer Schleifscheibe genutzt. Eine gattungsgemäße Schleifanlage umfasst eine Schleifmaschine, welche eine rotierend und/oder schwingend angetriebene Kopfplatte aufweist, die zum Aufnehmen und lösbaren Halten einer Schleifscheibe ausgebildet ist, und eine Vorrichtung zum Austauschen der Schleifscheibe, welche an der Kopfplatte der Schleifmaschine lösbar angebracht ist, die zunächst ein Anschlagelement verwendet, an welches die Kopfplatte mit der Schleifscheibe in einer Abnahmeposition anlegbar ist. Bei einem entsprechenden gattungsgemäßen Verfahren zum Austauschen einer Schleifscheibe, welche an einer Kopfplatte einer Schleifmaschine lösbar angebracht ist, wird die Kopfplatte mit der Schleifscheibe in eine Abnahmeposition bewegt, in welcher die Schleifscheibe an ein Anschlagelement angrenzt. Sodann wird herkömmlicherweise mit einem Ablösewerkzeug eine Schleifscheibe gelöst, was auch teilautomatisiert erfolgen kann. Eine solche Vorrichtung und ein gattungsgemäßes Verfahren sind beispielweise in DE 20 2013 101 858 U1 und AT 512 464 A1 beschrieben. Als Ablösewerkzeug wird dort eine Rakel oder eine Art Messer zwischen die Kopfplatte und die Schleifscheibe eingeführt, um den Kontakt zwischen diesen zu lösen. Wird diese Bewegung nicht mit hoher Präzision zu einer exakt positionierten Kopfplatte durchgeführt, kann die Schleifscheibe nicht gelöst werden.

Eine weitere Vorrichtung zum Austauschen einer Schleifscheibe, welche an einer Schleifmaschine lösbar angebracht ist, ist aus US 5 231 803 A bekannt.

Schleifmaschinen mit einer Kopfplatte, an welcher eine Schleifscheibe lösbar gehalten werden kann, sind beispielsweise in US 3 808 753 A, US 5 123 216 A und EP 2 153 938 A1 beschrieben.

Nachteilig an dem bekannten Vorgehen ist, dass der personelle Aufwand hoch ist. Auch der damit verbundene Zeitbedarf ist hoch. Werden teilautomatisierte Lösungen eingesetzt, steigt die Fehlerhäufigkeit, mit welcher eine auszutauschende Schleifscheibe unerwünschterweise an der Kopfplatte verbleibt.

Eine **Aufgabe** der Erfindung ist es, eine Schleifanlage und ein Verfahren anzugeben, die ein Austauschen einer Schleifscheibe zuverlässig und unter möglichst geringem manuellen Aufwand ermöglichen.

Diese Aufgabe wird durch die Schleifanlage mit der Vorrichtung zum Austauschen einer Schleifscheibe mit den Merkmalen des Anspruchs 1 sowie durch das Verfahren zum Austauschen einer Schleifscheibe mit den Merkmalen des Anspruchs 11 gelöst.

Vorteilhafte Varianten des erfindungsgemäßen Verfahrens und der erfindungsgemäßen Schleifanlage sind Gegenstand der abhängigen Ansprüche und werden außerdem in der folgenden Beschreibung, insbesondere im Zusammenhang mit den Figuren, erläutert.

Bei der Schleifanlage ist erfindungsgemäß vorgesehen, dass die Vorrichtung zum Austauschen einer Schleifscheibe, welche an der Kopfplatte der Schleifmaschine lösbar angebracht ist, aufweist: ein Anschlagelement, an welches die Kopfplatte mit der Schleifscheibe in einer Abnahmeposition anlegbar ist; mindestens ein Abnahmefinger, welcher zwischen einer Rückzugsposition und einer Eingriffsposition verstellbar ist, in welcher der Abnahmefinger in eine Ausnehmung an der Kopfplatte in der Abnahmeposition eingreift, wobei die Ausnehmung einen Eingriffshohlraum zwischen der gehaltenen Schleifscheibe und der Kopfplatte bildet; und eine Spanneinrichtung, durch welche der mindestens eine Abnahmefinger relativ zum Anschlagelement verschiebbar ist. Dabei kommt der Abnahmefinger zum Lösen der Schleifscheibe an deren Rückseite zur Anlage und spannt die Schleifscheibe am Anschlagelement fest.

Bei dem Verfahren zum Austauschen einer Schleifscheibe, welche an einer Kopfplatte einer Schleifmaschine lösbar angebracht ist, ist erfindungsgemäß vorgesehen, dass in der Abnahmeposition mindestens ein Abnahmefinger von einer Rückzugsposition in eine Eingriffsposition bewegt wird, in welcher er in eine Ausnehmung an der Kopfplatte eingreift und damit die Schleifscheibe hintergreift, wobei die Ausnehmung einen Eingriffshohlraum zwischen der gehaltenen Schleifscheibe und der Kopfplatte bildet, dass mit einer Spanneinrichtung der mindestens eine Abnahmefinger relativ zum Anschlagelement so verschoben wird, dass der Abnahmefinger an der Rückseite der Schleifscheibe zur Anlage kommt und die Schleifscheibe am Anschlagelement festspannt, und dass die Kopfplatte von dem Anschlagelement fortbewegt wird, wobei die Schleifscheibe am Anschlagelement gehalten wird.

Eine wesentliche Idee besteht in der Formung von mindestens einer Ausnehmung in der Kopfplatte, in welche ein Abnahmefinger zuverlässig eingreifen kann.

Wird eine Schleifscheibe durch beispielsweise ein Klettband an einer Stirnseite der Kopfplatte gehalten, so ist eine Lücke zwischen der Stirnseite und der Schleifscheibe sehr gering. Eine solche sehr kleine Lücke wird beispielsweise in DE 20 2013 101 858 U1 verwendet, um ein Ablösewerkzeug zwischen die Schleifscheibe und die Kopfplatte einzuführen. Wegen der kleinen Lücke kann es bereits bei geringsten Positionsabweichungen zu Fehlern kommen.

Hingegen wird durch die Ausnehmung ein Eingriffshohlraum geschaffen, an dem der Abstand von der Kopfplatte zu der gehaltenen Schleifscheibe größer als. Im Gegensatz zu herkömmlichen Kopfplatten ohne Ausnehmung muss daher nicht ein äußerst kleiner Spalt zwischen der Kopfplatte und der Schleifscheibe zum Eingreifen eines Ablösewerkzeugs dienen. Vielmehr erlaubt die Ausnehmung durch ihre verhältnismäßig großen Abmessungen, dass auch bei Positionierungenauigkeiten der Abnahmefinger zwischen die Kopfplatte und die Schleifscheibe eingreifen kann. Vorteilhafterweise ist hierzu auch kein Bedienpersonal erforderlich.

Grundsätzlich kann ein Abnahmefinger eine beliebige Form haben, solange dessen Abmessungen ein Einführen in eine der Ausnehmungen an der Kopfplatte ermöglicht. Bevorzugt ist das Ende des Abnahmefingers, mit welchem der Abnahmefinger in die Ausnehmung eingeführt wird, abgerundet. Im Gegensatz zu messerartigem Ablösewerkzeug wie aus DE 20 2013 101 858 U1 wird dadurch vermieden, dass der Abnahmefinger eine Schleifscheibe durchtrennt und dadurch diese nicht festspannen kann. Aus demselben Grund weist der Abnahmefinger vorzugsweise auch keine Messerkante auf, sondern ist abgerundet oder hat Kanten von beispielsweise 90°.

Die mindestens eine Ausnehmung kann zweckmäßigerweise an einer Mantelfläche der Kopfplatte vorgesehen sein. Die Kopfplatte kann etwa zylinderförmig sein, wobei an einer, vorzugsweise kreisförmigen, Stirnseite die Schleifscheibe angebracht wird. Die mindestens eine Ausnehmung kann sich nun an der Kante der Mantelfläche zur Stirnfläche befinden.

Ein weiterer grundlegender Gedanke kann darin gesehen werden, dass vor dem tatsächlichen Lösen der Schleifscheibe diese zunächst festgespannt wird. Dies wird durch eine weitere Bewegung des mindestens einen Abnahmefingers erreicht. Mit einer ersten Bewegung wird der Abnahmefinger von einer Rückzugsposition, in welcher er beabstandet von der Kopfplatte ist, in eine Eingriffsposition gebracht, in welcher er in die Ausnehmung eingreift. In dieser Position ist der Abnahmefinger zunächst noch beabstandet zur Schleifscheibe. Diese erste Bewegung kann als Radialbewegung in Bezug auf die etwa zylinderförmige Kopfplatte erfolgen. Sodann wird der Abnahmefinger in einer zweiten Bewegung gegen die Schleifscheibe geführt. Diese Bewegung kann als Axialbewegung in Bezug auf die Kopfplatte angesehen werden. Das Einspannen der Schleifscheibe wird zusammen mit dem Anschlagelement und der Spanneinrichtung erreicht. Die Spanneinrichtung bewegt den mindestens einen Abnahmefinger in Richtung des Anschlagelements, womit die Schleifscheibe zwischen dem Abnahmefinger und dem Anschlagelement festgespannt wird.

Sodann kann die Kopfplatte von dem Anschlagelement wegbewegt werden, wobei die auszutauschende Schleifscheibe am Anschlagelement verbleibt.

Das Anschlagelement weist vorzugsweise eine ebene Fläche auf, deren Größe mindestens der der Schleifscheibe entspricht. Dadurch kann die Schleifscheibe in der Abnahmeposition vollständig an das Anschlagelement anliegen.

Dabei kann das Anschlagelement mehrere Vertiefungen oder Durchbrüche aufweisen, wodurch ein unerwünschtes Anhaften der Schleifscheibe am Anschlagelement verhindert werden kann. Zudem wird dadurch ein Zugang für Sensoren bereitgestellt, mit denen der Austauschvorgang überwacht werden kann. Insbesondere kann überprüft werden, ob nach dem Fortbewegen der Kopfplatte die auszutauschende Schleifscheibe am Anschlagelement gehalten wird.

Für ein möglichst einfaches Lösen der Schleifscheibe von der Kopfplatte muss die Schleifscheibe sicher am Anschlagelement gehalten werden. Hierzu sind bevorzugt mehrere Abnahmefinger vorgesehen. Dadurch wird die Schleifscheibe an mehreren Stellen festgehalten, womit auch das Risiko des Reißens der Schleifscheibe verringert wird. Die Abnahmefinger können über einen Abschnitt des Umfangs des Anschlagelements, welches plattenförmig gebildet sein kann, angeordnet sein. Beispielsweise können die Abnahmefinger kreisförmig oder halbkreisförmig um das Anschlagelement angeordnet sein.

Ein gleichmäßiges Bewegen der mehreren Abnahmefinger kann kostengünstig erreicht werden, wenn alle Abnahmefinger von ein und derselben Spanneinrichtung bewegt werden. Das heißt, ein Stellelement oder anderes bewegliches Element der Spanneinrichtung ist mit jedem der Abnahmefinger gekoppelt.

Hingegen kann jeder Abnahmefinger für das Bewegen von der Rückzugsposition in die Eingriffsposition ein eigenes Stellelement umfassen.

Eine elektronische Steuereinheit kann das Festspannen der Schleifscheibe mittels des mindestens einen Abnahmefingers steuern. Die Steuereinheit kann nach einem Fortbewegen der Kopfplatte den Abnahmefinger von dem Anschlagelement wegbewegen, um die Schleifscheibe freizugeben.

Zum Bewegen der Kopfplatte kann ein Schleifroboter mit einem bewegbaren Arm vorgesehen sein, an dem die Schleifmaschine angeordnet ist.

Sobald die gelöste Schleifscheibe von den Abnahmefingern freigegeben wird, fällt sie herab. Unterhalb des Anschlagelements kann ein Auffangbehälter angeordnet sein, in dem eine gelöste Schleifscheibe aufgefangen wird.

Damit ein Abnahmefinger in eine Ausnehmung der Kopfplatte eingreifen kann, muss eine Drehausrichtung der Kopfplatte kontrolliert werden.

Das Einführen des Abnahmefingers kann erleichtert werden, wenn eine Ausnehmung breiter ist als der Abnahmefinger, bevorzugt mindestens doppelt so breit. Alternativ oder zusätzlich kann eine Ausnehmung radial zum Mittelpunkt der Kopfplatte hin schmäler werden. Durch eine solche V-Form kann ein Abnahmefinger auch bei unpräziser Positionierung eingreifen. Weiterhin kann der Abnahmefinger über ein Gelenk gehalten sein, welches eine Bewegung senkrecht zur Bewegungsrichtung, die durch die Spanneinrichtung bereitgestellt wird, ermöglicht.

Besonders bevorzugt ist aber eine Justiereinheit vorgesehen, mit welcher eine Drehausrichtung der Kopfplatte relativ zu dem mindestens einen Abnahmefinger bestimmbar ist.

Die Justiereinheit kann so angeordnet sein, dass eine Drehausrichtung der Kopfplatte feststellbar ist, während die Abnahmeposition eingenommen ist. Vorteilhafterweise wird dadurch eine anderenfalls erforderliche Bewegung der Kopfplatte von der Justiereinheit zu der Abnahmeposition vermieden, womit Ungenauigkeiten und erhöhter Zeitbedarf einhergehen können.

Alternativ kann aber auch die Justiereinheit so angeordnet sein, dass die Kopfplatte während einer Bestimmung ihrer Drehausrichtung beabstandet von der Abnahmeposition ist. Dadurch kann ein nachträgliches Aufrüsten einer Vorrichtung leichter umgesetzt werden.

Vorzugsweise weist die Justiereinheit mindestens einen Positionssensor auf, durch welchen eine Position der Kopfplatte mit der Schleifscheibe ermittelt und/oder in eine definierte Stellposition, das heißt Drehausrichtung, bringbar ist. Beispielsweise kann mit dem mindestens einen Positionssensor ein Lochbild der Schleifscheibe detektiert werden. Eine Steuereinheit kann dazu eingerichtet sein, die Kopfplatte solange zu drehen, bis der mindestens eine Positionssensor die gewünschte Drehausrichtung feststellt.

Bei einer weiteren bevorzugten Ausführung ist eine Magaziniereinheit mit einem Magazin von unbenutzten Schleifscheiben vorgesehen. An einer Aufnahmeposition kann eine unbenutzte Schleifscheibe mit einer nach außen gerichteten Verbindungsseite aus dem Magazin bereitgestellt werden. Durch Aufpressen der Kopfplatte auf die Verbindungsseite der unbenutzten Schleifscheibe kann diese mit der Kopfplatte verbindbar sein.

Die Magaziniereinheit kann Haltemittel umfassen, welche stets nur die äußerste Schleifscheibe freigeben, so dass immer nur eine Schleifscheibe von der Kopfplatte aufgenommen wird.

Die Bewegung der Kopfplatte der Schleifmaschine kann zweckmäßigerweise über einen Roboterarm, das heißt einen bewegbaren Arm, erfolgen.

Damit Bedienpersonal nicht von Bewegungen des Roboterarms gefährdet wird, ist die Schleifanlage so konstruiert, dass gelöste Schleifscheiben von einer Rückseite der Vorrichtung entnommen werden können. Die Rückseite liegt außerhalb des Bewegungsbereichs des Roboterarms, welcher sich ausschließlich auf einer gegenüberliegenden Vorderseite der Vorrichtung bewegt. Für eine Entnahme gelöster Schleifscheiben von der Rückseite kann der Auffangbehälter, der unter dem Anschlagelement und den Abnahmefingern angeordnet ist, zur Rückseite der Vorrichtung entnommen werden. Ebenso kann das Magazin von der Rückseite entnehmbar sein, um unbenutzte Schleifscheiben nachzufüllen oder ein neues Magazin einzusetzen.

Damit zeitlich kurze Arbeitsabläufe mit konstruktiv einfachen Mitteln ermöglicht werden, sind das Magazin und der Auffangbehälter vorzugsweise auf einer gemeinsamen Stützeinrichtung angeordnet. Die Stützeinrichtung kann zur Rückseite der Vorrichtung herausgefahren oder bewegt werden, womit in einem Arbeitsschritt sowohl der Auffangbehälter entleert als auch das Magazin nachgefüllt oder ersetzt werden können.

Zur Erhöhung der Sicherheit für Personal kann eine Sperreinrichtung an der Stützeinrichtung, welche das Magazin und den Auffangbehälter trägt, vorgesehen sein. Die Sperreinrichtung erlaubt ein Ausfahren der Stützeinrichtung an der Rückseite der Vorrichtung nur dann, wenn sich der Roboterarm mit der Schleifmaschine nicht an der Vorrichtung befindet. Dies kann mit einem Anwesenheitssensor an der Vorderseite der Vorrichtung festgestellt werden.

Um die Zuverlässigkeit beim Austauschen einer Schleifscheibe weiter zu erhöhen, können an dem Anschlagelement und/oder der Magaziniereinheit jeweils eine Sensoreinrichtung vorgesehen sein, mit welcher das Abnehmen beziehungsweise Aufnehmen der Schleifscheibe überprüfbar ist. Die Sensoreinrichtung umfasst bevorzugt einen oder mehrere optische Sensoren, wobei abhängig von der Art von Störeinflüssen auch akustische, kapazitive oder induktive Sensoren vorteilhaft sein können.

Die erfindungsgemäße Schleifanlage umfasst eine Schleifmaschine, welche eine rotierend und/oder schwingend angetriebene Kopfplatte aufweist, welche zum Aufnehmen und lösbaren Halten einer Schleifscheibe ausgebildet ist. Die Schleifanlage umfasst weiterhin die beschriebene erfindungsgemäße Vorrichtung zum Austauschen einer Schleifscheibe. Die Schleifanlage ist entsprechend dem grundlegenden Gedanken der Erfindung gebildet, wonach der Austausch einer Schleifscheibe über ein Festspannen der Schleifscheibe mittels Abnahmefingern erfolgt. Um diese Aktionen der Abnahmefinger zuverlässig und in einfacher Weise zu ermöglichen, ist eine spezielle Formung der Kopfplatte der Schleifmaschine vorgesehen. So ist an einem Außenrand der Kopfplatte mindestens eine Ausnehmung vorgesehen, welche zum Hintergreifen einer Schleifscheibe auf der Kopfplatte ausgebildet ist und einen Eingriffshohlraum zwischen der gehaltenen Schleifscheibe und der Kopfplatte bildet. Ein Abnahmefinger kann durch eine Radialbewegung bezüglich der Kopfplatte in die Ausnehmung eingefahren werden. Vorteilhafterweise muss demnach der Abnahmefinger nicht an einer Kontaktfläche der Schleifscheibe zur Kopfplatte zwischen diese eingeführt werden. Dafür wäre eine äußerst hohe Präzision der Bewegungsführung erforderlich, was der Zuverlässigkeit abträglich wäre.

Für eine möglichst gleichmäßige Kraftübertragung ist eine Radialausdehnung der Kopfplatte bevorzugt gleich oder größer der Radialausdehnung der Schleifscheibe. Allein im Bereich einer Ausnehmung ist die Radialausdehnung der Kopfplatte geringer als die der Schleifscheibe.

Ein leichtes Nachrüsten herkömmlicher Schleifmaschinen wird ermöglicht, wenn die Kopfplatte eine Adapterplatte aufweist, an welcher die mindestens eine Ausnehmung ausgebildet ist. Dabei ist die Adapterplatte auswechselbar an einem Grundkörper der Kopfplatte gehaltert. Der Grundkörper kann auch derjenige Teil einer Schleifmaschine sein, welcher zum Halten einer Schleifscheibe ausgebildet ist, so dass eine herkömmliche Schleifmaschine aufrüstbar ist.

Prinzipiell kann die Schleifscheibe in beliebiger Weise an der Adapterplatte befestigbar sein. Bevorzugt ist aber an der Adapterplatte eine Klettschicht zum lösbaren Befestigen der Schleifscheibe angeordnet. Eine Klettschicht ist besonders geeignet für das Ablösen einer benutzten Schleifscheibe gemäß der Erfindung, was durch eine Relativbewegung zwischen der Kopfplatte und der Schleifscheibe erfolgt.

Bei einer bevorzugten Verfahrensvariante erfolgt das Fortbewegen der Kopfplatte von dem Anschlagelement als eine Kippbewegung. Bei dieser werden verschiedene Kontaktbereiche zwischen der Kopfplatte und der benutzten Schleifscheibe nacheinander gelöst. Eine solche Bewegung ist insbesondere zum Lösen eines Klettverschlusses nützlich.

Weitere Vorteile und Merkmale der Erfindung werden nachstehend mit Bezug auf die beigefügten schematischen Figuren beschrieben. Hierin zeigen:
- Fig. 1: eine Perspektivansicht einer erfindungsgemäßen Schleifanlage mit einer Schleifmaschine und einer Vorrichtung zum Austauschen einer Schleifscheibe der Schleifmaschine;
- Fig. 2: eine Perspektivansicht der Schleifanlage von Fig. 1, wobei ein Roboterarm mit der Schleifmaschine gegenüber der Situation aus Fig. 1 weiterbewegt wurde;
- Fig. 3: eine Perspektivansicht der Schleifanlage von Fig. 1 und 2, wobei der Roboterarm mit der Schleifmaschine gegenüber der Situation aus Fig. 2 weiterbewegt wurde;
- Fig. 4: eine Perspektivansicht der Rückseite der Schleifanlage der vorangehenden Figuren;
- Fig. 5: eine Perspektivansicht einer Schleifmaschine einer erfindungsgemäßen Schleifanlage sowie Komponenten einer erfindungsgemäßen Vorrichtung zum Austauschen einer Schleifscheibe;
- Fig. 6: eine Perspektivansicht von Komponenten der Schleifanlage der Figuren 1 bis 5;
- Fig. 7: eine Perspektivansicht von Komponenten einer erfindungsgemäßen Schleifanlage, wobei die Abnahmefinger noch nicht in Ausnehmungen einer Kopfplatte der Schleifmaschine eingefahren sind;
- Fig. 8: eine Perspektivansicht der Komponenten von Fig. 7, wobei die Abnahmefinger in die Ausnehmungen der Kopfplatte eingefahren sind, aber eine an der Kopfplatte gehaltene Schleifscheibe noch nicht kontaktieren;
- Fig. 9: eine Perspektivansicht der Komponenten der Figuren 7 und 8, wobei die Abnahmefinger in die Ausnehmungen der Kopfplatte eingefahren sind und die Schleifscheibe gegen ein Anschlagelement festspannen;
- Fig. 10: eine Perspektivansicht der Komponenten der Figuren 7 bis 9, wobei die Kopfplatte von der festgespannten Schleifscheibe fortbewegt ist;
- Fig. 11: eine Perspektivansicht von Komponenten einer erfindungsgemäßen Schleifanlage, wobei sich der Roboterarm mit der Kopfplatte vor einem Magazin mit unbenutzten Schleifscheiben befindet, und
- Fig. 12: eine Perspektivansicht einer Magaziniereinheit, welche zum Nachfüllen von unbenutzten Schleifscheiben geöffnet ist.

Gleiche und gleich wirkende Bestandteile sind in den Figuren in der Regel mit denselben Bezugszeichen gekennzeichnet.

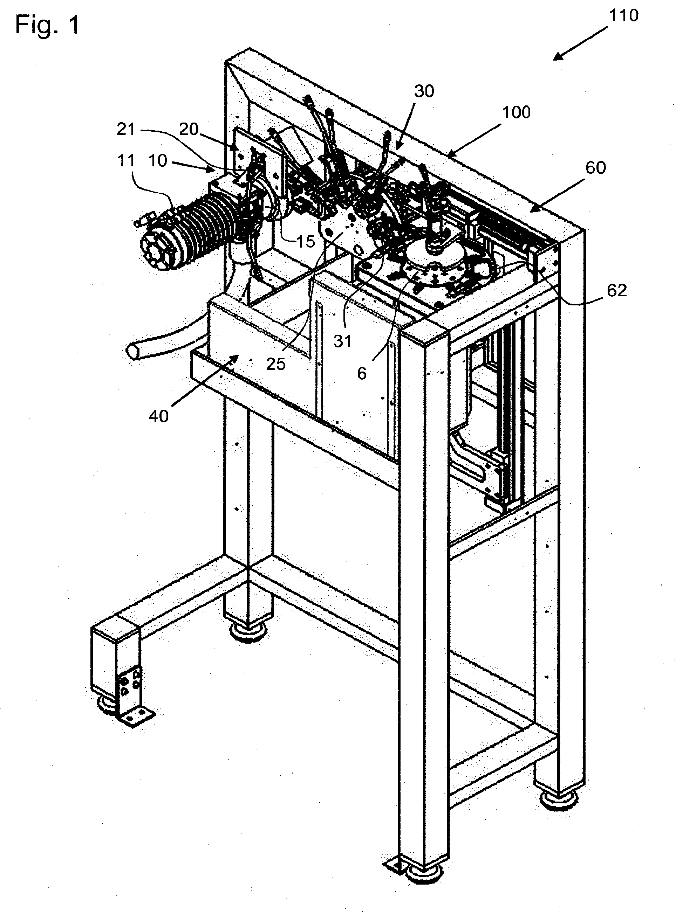

Mit Bezug auf die Figuren 1 bis 4 wird ein Ausführungsbeispiel einer erfindungsgemäßen Schleifanlage 110 beschrieben. Die Schleifanlage 110 umfasst eine Schleifmaschine 10 mit einer Kopfplatte 15, an welcher eine Schleifscheibe gehalten ist, sowie eine erfindungsgemäße Vorrichtung 100 zum Austauschen der Schleifscheibe. Die Figuren 1 bis 4 stellen aufeinanderfolgende Verfahrensschritte dar, durch welche die Schleifscheibe ausgetauscht wird.

Die Vorrichtung 100 zum Austauschen einer Schleifscheibe umfasst als wesentliche Komponenten eine Justiereinheit 20, eine Spanneinrichtung 30 zum Verfahren von Abnahmefingern 31 und eine Magaziniereinheit 60. Die Schleifmaschine 10 weist eine Kopfplatte 15 auf, an welcher die auszutauschende Schleifscheibe angeordnet ist. Die Kopfplatte 15 der Schleifmaschine 10 kann über einen aktiven Kontaktflansch 11 an einem Roboterarm (nicht dargestellt) befestigt sein. Zum Austauschen der Schleifscheibe wird die Schleifmaschine 10 mit der Kopfplatte 15 zunächst zu der Justiereinheit 20, weiter zur Spanneinrichtung 30 mit den Abnahmefingern 31 und schließlich zu der Magaziniereinheit 60 bewegt.

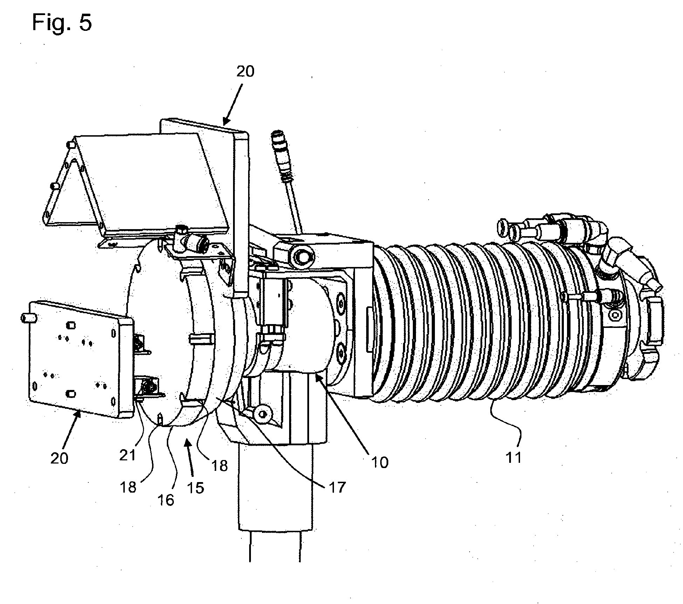

In der Situation von Fig. 1 ist die Kopfplatte 15 der Schleifmaschine 10 zu einer Justierposition bewegt, in welcher die Justiereinheit 20 eine Drehausrichtung der Kopfplatte messen kann. Diese Situation ist vergrößert in Fig. 5 dargestellt.

Wie in Fig. 5 gezeigt, ist in der Kopfplatte 15 mindestens eine Ausnehmung 18 gebildet. Im dargestellten Beispiel sind mehrere Ausnehmungen 18 vorhanden, welche über den Umfang, das heißt die Mantelfläche, der Kopfplatte 15 verteilt sind. An der Kopfplatte 15 kann eine Schleifscheibe (nicht dargestellt) gehalten werden. Die Schleifscheibe umfasst mehrere Löcher. Mit der Justiereinheit 20 wird die Position dieses Lochbilds der Schleifscheibe relativ zu einer Längsachse des Kontaktflansches 11 oder des Roboterarms festgestellt. Hierzu umfasst die Justiereinheit 20 mehrere Positionssensoren 21. Die Justiereinheit 20 kann einen Anschlag oder eine Zentrierecke aufweisen, durch den die Kopfplatte 15 in eine definierte Position bezüglich der Justiereinheit 20 gebracht werden kann. In dieser definierten Position ist die Drehausrichtung der Kopfplatte 15 zunächst unbekannt. Um diese zu bestimmen, wird mit den Positionssensoren 21 die Lage der Löcher der Schleifscheibe bestimmt. Sind die Positionssensoren 21 derart gestaltet, dass sie durch das Material der Schleifscheibe hindurch messen können, so können auch die Ausnehmungen 18 zur Positionsbestimmung herangezogen werden. In diesem Fall kann zumindest ein Messbereich von einem der Positionssensoren 21 auf einen äußeren Bereich der Kopfplatte 15 gerichtet sein. Je nach Drehstellung befindet sich an diesem äußeren Bereich eine Ausnehmung 18 oder das Material der Kopfplatte 15. Die Zuverlässigkeit der Justiereinheit 20 kann erhöht werden, wenn der Messbereich eines weiteren Positionssensors 21 auf einen zentralen Bereich der Kopfplatte 15 gerichtet ist, wo sich keine Ausnehmung 18 befinden kann. Durch Verrechnen der Messsignale der beiden vorgenannten Positionssensoren 21 kann mit großer Sicherheit die Drehausrichtung der Kopfplatte 15 ermittelt werden.

Bei dem Beispiel von Fig. 5 weist die Kopfplatte 15 eine Adapterplatte 16 auf, an welcher die Ausnehmungen 18 gebildet sind. An der Stirn- oder Vorderseite der Adapterplatte 16 wird die Schleifscheibe befestigt (nicht in Fig. 5 dargestellt). An einer Rückseite, das heißt gegenüberliegend zur Vorderseite, umfasst die Adapterplatte 16 Befestigungsmittel. Mit diesen kann sie rotationsstarr an einen Grundkörper 17 der Kopfplatte 18 montiert werden. Dadurch können herkömmliche Schleifmaschinen 10 leicht nachgerüstet werden, bei welchen die Kopfplatte 15 allein einen Grundkörper 17, aber keine Adapterplatte 16 mit Ausnehmungen 18 aufweist. Bei solchen herkömmlichen Schleifmaschinen 10 wird eine Schleifscheibe direkt an eine ebene Fläche des Grundkörpers 17 befestigt. Zum Nachrüsten wird an diese ebene Fläche des Grundkörpers 17 die Rückseite der Adapterplatte 16 verbunden.

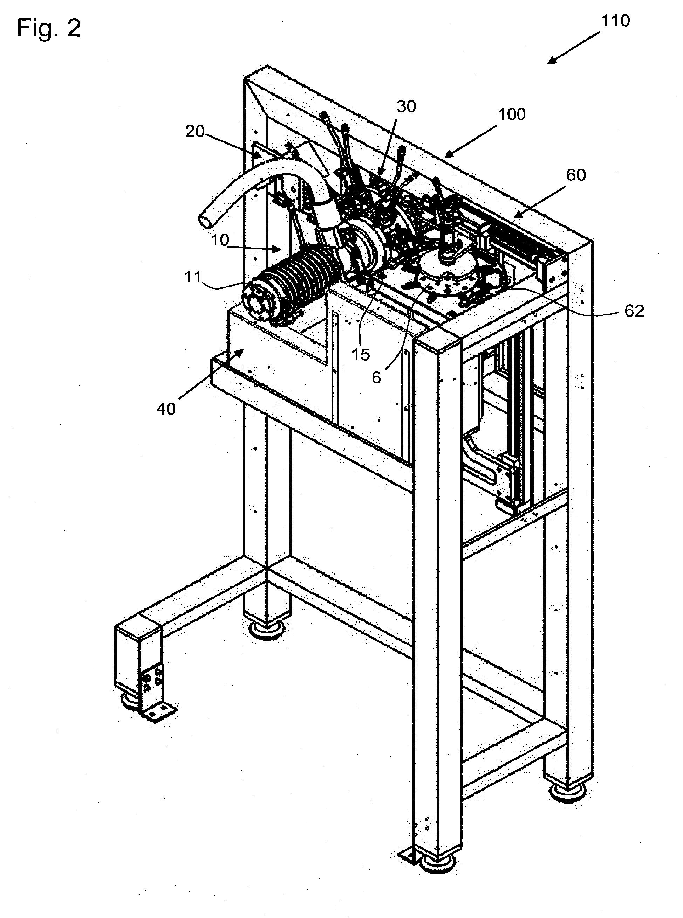

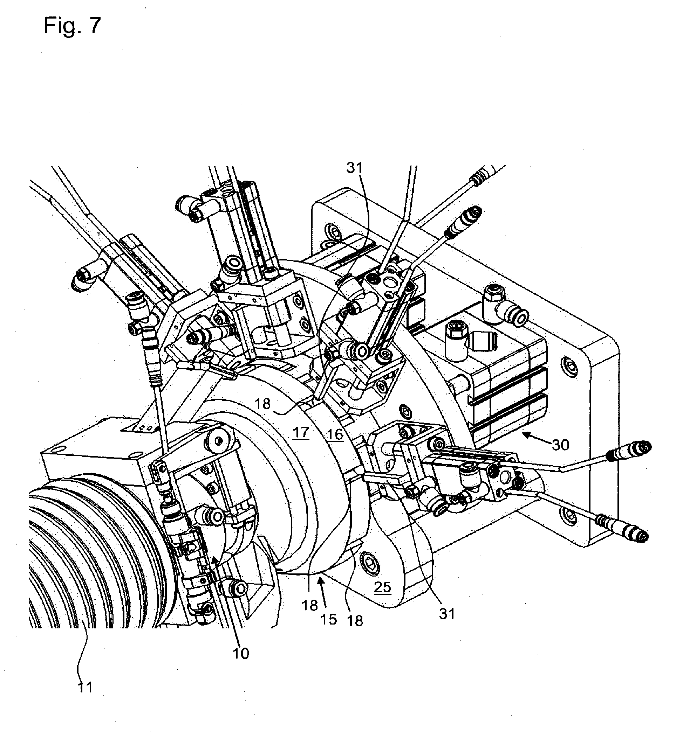

Sobald mit der Justiereinheit 20 die Drehstellung ermittelt und auf einen gewünschten Wert eingestellt ist, wird der Roboterarm mit der Kopfplatte 15 von der in Fig. 1 gezeigten Situation zu der in Fig. 2 abgebildeten Situation bewegt. Diese Situation ist vergrößert in Fig. 7 dargestellt. Die Kopfplatte 15 wird gegen ein feststehendes Anschlagelement 25 der Vorrichtung 100 bewegt. Dadurch befindet sich die Kopfplatte 15 in einer definierten Abnahmeposition. Die Drehausrichtung der Kopfplatte 15 ist durch die vorherige Messung mit der Justiereinheit 20 bekannt. Die auszutauschende Schleifscheibe befindet sich zwischen der Kopfplatte 15 und dem Anschlagelement 25.

Das Anschlagelement 25 weist eine ebene Anschlagfläche auf, welche bevorzugt zumindest gleich groß wie die Fläche der auszutauschenden Schleifscheibe ist.

Benachbart zu dem Anschlagelement 25 sind die Abnahmefinger 31 angeordnet. Während die Kopfplatte 15 an das Anschlagelement 25 bewegt wird, befinden sich die Abnahmefinger 31 in einer Rückzugsposition. Sobald sich die Kopfplatte 15 mit der Schleifscheibe 5 in der Abnahmeposition befindet, werden die Abnahmefinger 31 von der Rückzugsposition in Richtung des Zentrums der Kopfplatte 15 bewegt. So werden die Abnahmefinger in eine Eingriffsposition geführt, in welcher sie in die Ausnehmungen 18 eingreifen.

Die Abnahmefinger 31 können eine längliche Form haben. Von der Rückzugsposition zu der Eingriffsposition können sie in Richtung ihrer Längsachse bewegt werden. Vorzugsweise umfasst jeder Abnahmefinger 31 an seiner Mantelfläche eine ebene Kontaktfläche. In der Eingriffsposition ist die ebene Kontaktfläche der Schleifscheibe zugewandt. Durch die ebene Kontaktfläche kann ein besonders großer Kontaktbereich zwischen einem Abnahmefinger 31 und der angrenzenden Schleifscheibe erreicht werden.

Die Drehausrichtung der Kopfplatte 15 ist so gewählt, dass die Abnahmefinger 31 in die Ausnehmungen 18 eingreifen können, wenn sie in Richtung ihrer Längsachsen verstellt werden.

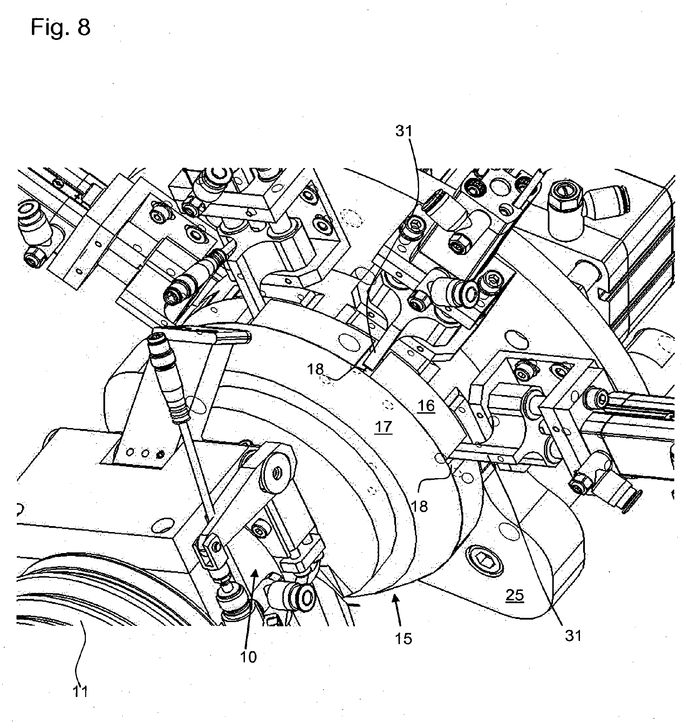

Die Funktionsweise der Abnahmefinger 31 wird im Folgenden näher mit Bezug auf die Figuren 7 bis 10 beschrieben. In der Situation von Fig. 7 befinden sich die Abnahmefinger 31 in der Rückzugsposition. In dieser geben sie den erforderlichen Raum frei, über den die Kopfplatte 15 mit der Schleifscheibe gegen das Anschlagelement 25 bewegt wird. Daraufhin werden die Abnahmefinger 31 nach innen zu der Eingriffsposition bewegt, welche in Fig. 8 dargestellt ist. Die Größe jeder Ausnehmung 18 ist sowohl in Umfangsrichtung der Kopfplatte 15 als auch in einer Axialrichtung der Kopfplatte 15 und des länglichen Kontaktflansches 11 größer als der eingreifende Abnahmefinger 31. Dadurch kann ein Abnahmefinger 31 auch bei geringen Positionierungenauigkeiten der Kopfplatte 15 in eine Ausnehmung 18 eingreifen. In dieser Eingriffsposition berührt der Abnahmefinger 31 die Schleifscheibe noch nicht. Dies ist in Fig. 8 dadurch erkennbar, dass zwischen den Abnahmefingern 31 und dem Anschlagelement 25 noch ein Freiraum verbleibt.

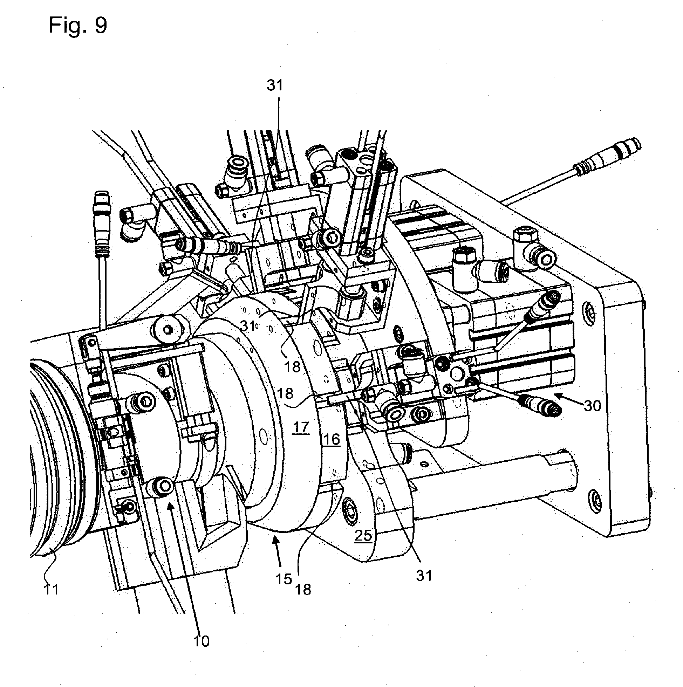

Daraufhin werden die Abnahmefinger 31 mit Hilfe der Spanneinrichtung 30 gegen das Anschlagelement 25 bewegt. Dies ist in Fig. 9 dargestellt. In dieser Situation wird die zu lösende Schleifscheibe zwischen den Abnahmefingern 31 und dem Anschlagelement 25 festgehalten oder -gespannt.

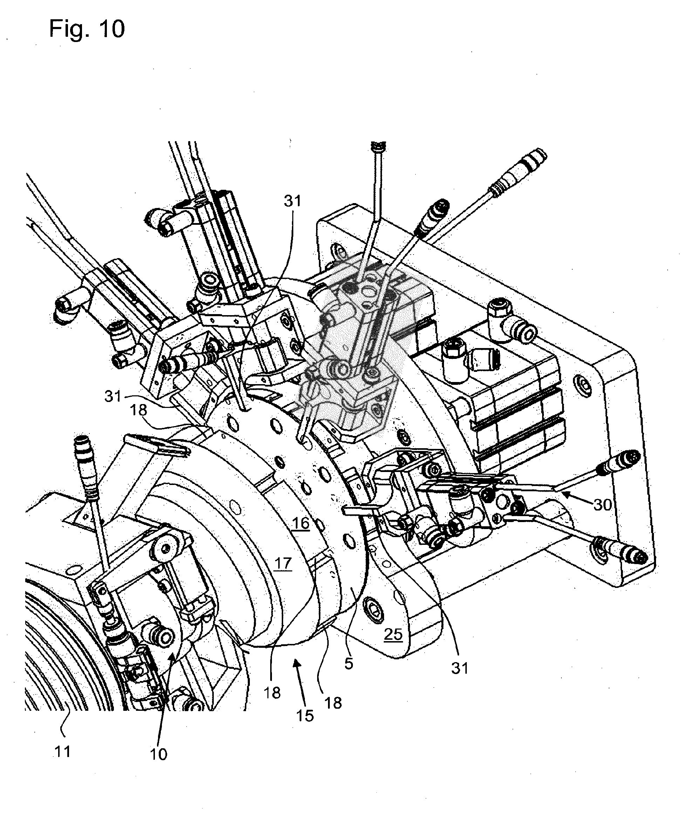

Wird nun die Kopfplatte 15 vom Anschlagelement 25 fortbewegt, verbleibt die Schleifscheibe am Anschlagelement 25. Dieser Schritt ist in Fig. 10 abgebildet. Insbesondere ist die Schleifscheibe 5 erkennbar. Sie kann mehrere Löcher umfassen, welche für den Schleifprozess vorteilhaft sind. Für das Lösen der Schleifscheibe 5 mit den Abnahmefingern 31 sind diese Löcher nicht erforderlich. Wie in Fig. 10 angedeutet, erfolgt das Fortbewegen der Kopfplatte 15 durch eine Kippbewegung. Dadurch werden verschiedene Kontaktbereiche zwischen der Kopfplatte 15 und der Schleifscheibe 5 nacheinander und nicht gleichzeitig gelöst. Für ein einfaches Lösen ist dies insbesondere dann vorteilhaft, wenn Klettbänder zum Halten der Schleifscheibe 5 an der Kopfplatte 15 verwendet werden.

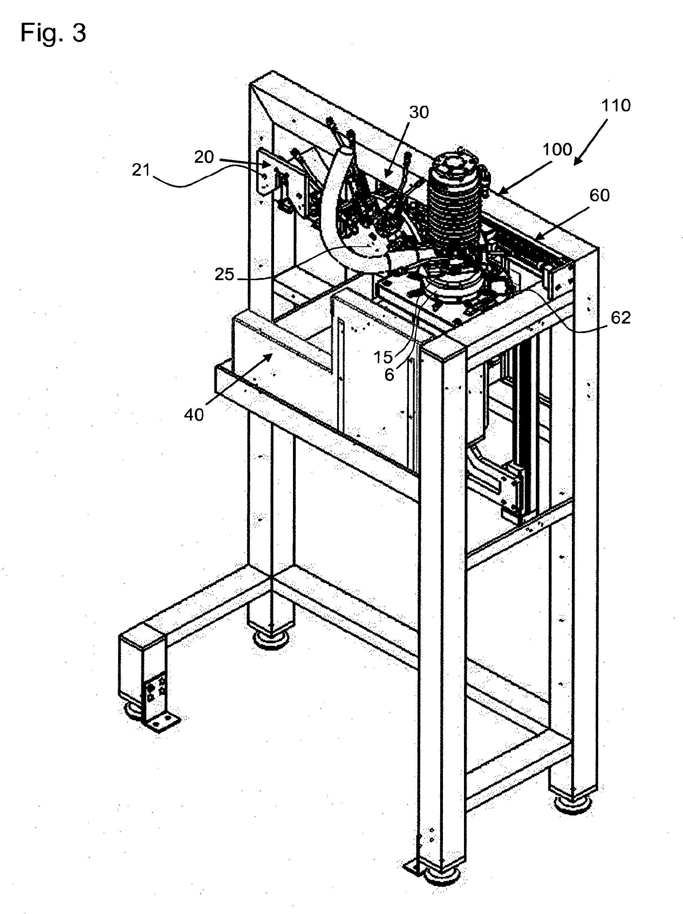

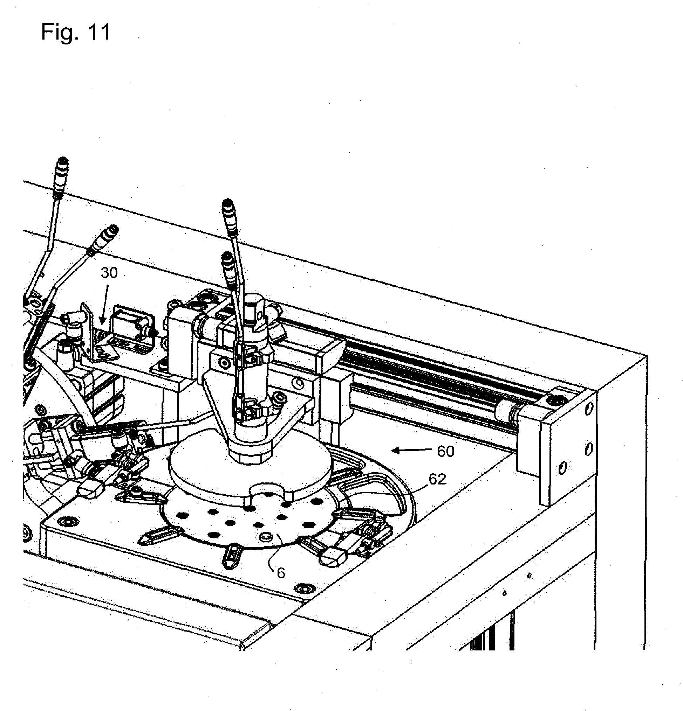

Sobald die benutzte Schleifscheibe 5 von der Kopfplatte 15 gelöst ist, wird die Schleifmaschine 10 mit der Kopfplatte 15 weiter zu der Magaziniereinheit 60 bewegt, wie in Fig. 3 gezeigt. Eine vergrößerte Darstellung der Magaziniereinheit 60 ist in Fig. 11 bereitgestellt. Die Magaziniereinheit 60 umfasst ein Magazin 62 mit einer Mehrzahl von unbenutzten Schleifscheiben 6. Mittels Haltemitteln ist immer nur eine unbenutzte Schleifscheibe 6 aus dem Magazin 62 entnehmbar. Dabei zeigt die Schleifscheibe 6 mit einer Verbindungsseite aus dem Magazin 62, so dass diese Verbindungsseite einfach mit der Kopfplatte 15 verbunden werden kann, indem die Kopfplatte 15 darauf aufgepresst wird. Mit diesem Schritt ist der Austausch einer benutzten Schleifscheibe 5 durch eine unbenutzte Schleifscheibe 6 abgeschlossen.

Um zu überprüfen, ob mit der Kopfplatte 15 eine unbenutzte Schleifscheibe 6 aus dem Magazin 62 aufgenommen und gehalten ist, sind bevorzugt ein oder mehrere Sensoren an der Magaziniereinheit 60 vorhanden. Bevorzugt können die Sensoren für diese Überprüfung die Ausnehmungen 18 nutzen. Wird festgestellt, dass die Ausnehmungen 18 verdeckt sind, so kann auf eine Schleifscheibe 6 an der Kopfplatte 15 geschlossen werden.

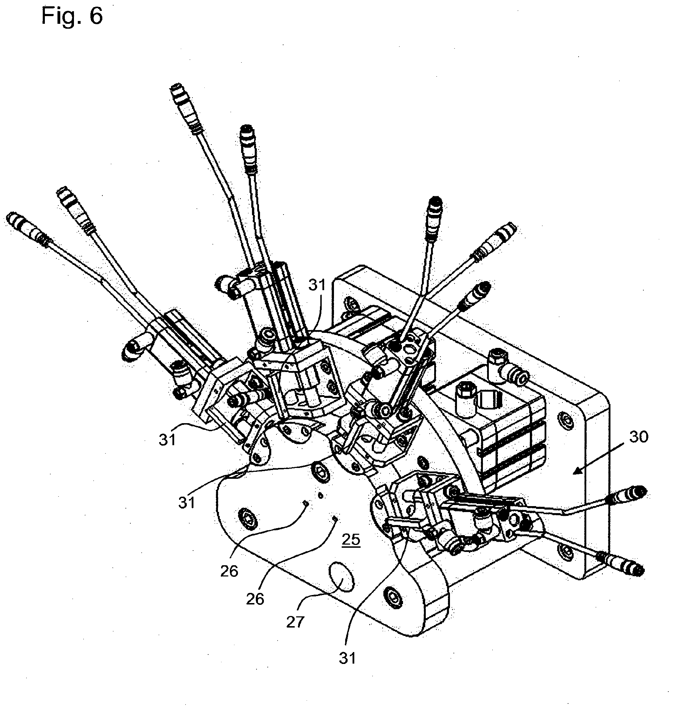

Damit die Vorrichtung 100 für einen weiteren Austausch bereit ist, werden die Abnahmefinger 31 zurück in die Rückzugsposition bewegt. Damit wird die bis dahin festgespannte Schleifscheibe 5 freigegeben und fällt in einen Auffangbehälter 40, welcher unterhalb des Anschlagelements 25 angeordnet ist, siehe beispielsweise Figuren 1 bis 3. Um besonders Zuverlässig eine Schleifscheibe 5 vom Anschlagelement 25 zu lösen, kann das Anschlagelement 25 Abblasöffnungen 26 umfassen, wie in Fig. 6 dargestellt. Mit Lüftungsmitteln kann durch die Abblasöffnungen 26 Luft gegen eine Schleifscheibe geblasen werden, welche am Anschlagelement 25 unerwünschterweise anhaftet.

Bevorzugt wird überprüft, ob nach dem Fortbewegen der Kopfplatte 15 vom Anschlagelement 25 eine Schleifscheibe 5 am Anschlagelement 25 verbleibt. Wie in Fig. 6 dargestellt, kann hierzu das Anschlagelement 25 eine Sensoröffnung 27 aufweisen. Durch diese kann ein Sensor messen, ob sich daran angrenzend eine Schleifscheibe 5 befindet. Der Sensor kann beispielsweise ein Lichttaster sein. Mit dem Sensor kann auch überprüft werden, ob eine von der Kopfplatte 15 gelöste Schleifscheibe 5 in den Auffangbehälter 45 fallen gelassen wird.

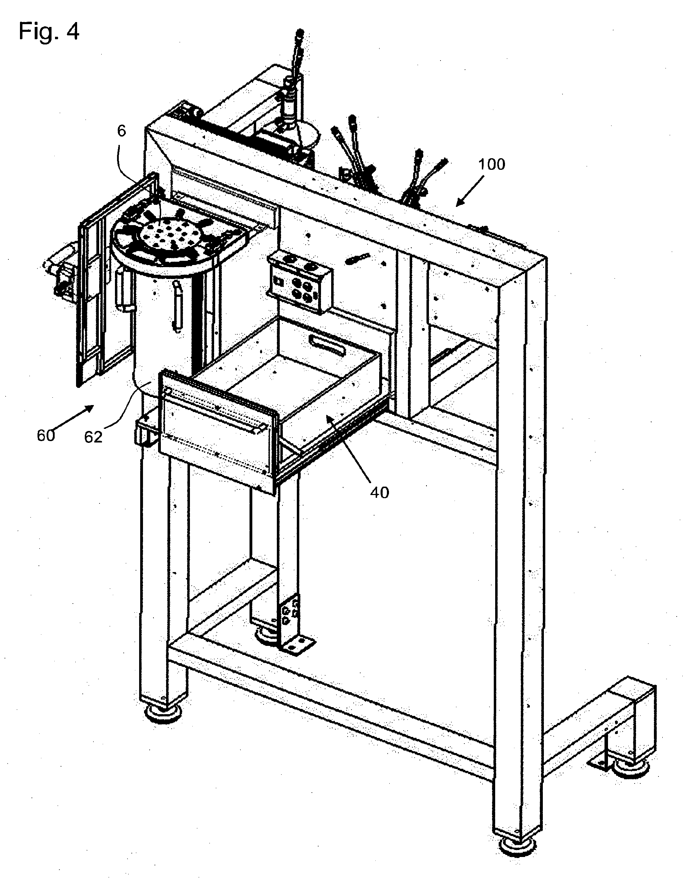

Das Entleeren des Auffangbehälters 40 erfolgt von einer Rückseite der Vorrichtung 100, was in Fig. 4 dargestellt ist. So kann ein Teller oder eine andere Stützeinrichtung zum Halten der Auffangbehälter 40 auf der Rückseite ausgefahren werden. Ebenso kann das Magazin 62 auf der Rückseite ausgefahren werden. Diese Situation ist in Fig. 4 gezeigt. Vorteilhafterweise ist hier der erforderliche Raum für das Entleeren des Auffangbehälters 40 und das Nachfüllen des Magazins 62 getrennt von dem Bewegungsraum des Roboterarms zum Austauschen einer Schleifscheibe.

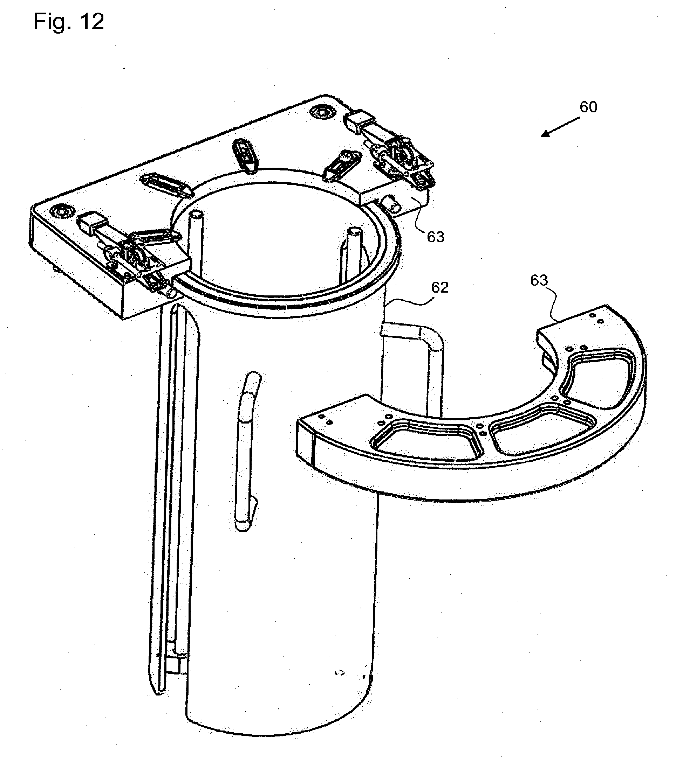

Zum Nachfüllen oder Austauschen eines leeren Magazins 62 kann, wie in Fig. 12 gezeigt, ein mehrteilig gebildeter Deckel 63 des Magazins 62 auseinandergeschoben und entfernt werden.

Durch die Erfindung wird ein zuverlässiger Austausch von Schleifscheiben an einer Schleifmaschine mit verhältnismäßig einfachen Mitteln ermöglicht. Der dabei erforderliche zeitliche und personelle Aufwand ist vorteilhafterweise gering.

## Patentansprüche

1. Schleifanlage
mit einer Schleifmaschine (10), welche eine rotierend und/oder schwingend angetriebene Kopfplatte (15) aufweist, die zum Aufnehmen und lösbaren Halten einer Schleifscheibe (5) ausgebildet ist, und
mit einer Vorrichtung zum Austauschen der Schleifscheibe (5), wobei die Vorrichtung ein Anschlagelement (25) aufweist, an welches die Kopfplatte (15) mit der Schleifscheibe (5) in einer Abnahmeposition anlegbar ist,
**dadurch gekennzeichnet, dass**
- an einem Außenrand der Kopfplatte (15) mindestens eine Ausnehmung (18) vorgesehen ist, welche zum Hintergreifen der Schleifscheibe (5) einen Eingriffshohlraum zwischen der Schleifscheibe (5) und der Kopfplatte (15) bildet,
- die Vorrichtung mindestens einen Abnahmefinger (31) aufweist, welcher zwischen einer Rückzugsposition und einer Eingriffsposition verstellbar ist, in welcher der Abnahmefinger (31) in eine der mindestens einen Ausnehmung (18) an der Kopfplatte (15) in der Abnahmeposition eingreift, und
- die Vorrichtung eine Spanneinrichtung (30) aufweist, durch welche der mindestens eine Abnahmefinger (31) relativ zum Anschlagelement (25) verschiebbar ist, wobei der Abnahmefinger (31) zum Lösen der Schleifscheibe (5) an deren Rückseite zur Anlage kommt und die Schleifscheibe (5) am Anschlagelement (25) festspannt.

2. Schleifanlage nach Anspruch 1,
**dadurch gekennzeichnet,**
**dass** mehrere Abnahmefinger (31) zumindest über einen Abschnitt des Umfangs des Anschlagelementes (25) verteilt angeordnet sind.

3. Schleifanlage nach Anspruch 1 oder 2,
**dadurch gekennzeichnet,**
**dass** unterhalb des Anschlagelementes (25) ein Auffangbehälter (40) zum Auffangen der gelösten Schleifscheibe (5) angeordnet ist.

4. Schleifanlage nach einem der Ansprüche 1 bis 3,
**dadurch gekennzeichnet,**
**dass** die Vorrichtung eine Justiereinheit (20) aufweist, mit welcher eine Drehausrichtung der Kopfplatte (15) relativ zu dem mindestens einen Abnahmefinger (31) bestimmbar ist.

5. Schleifanlage nach Anspruch 4,
**dadurch gekennzeichnet,**
**dass** die Justiereinheit (20) mindestens einen Positionssensor (21) aufweist, durch welchen eine Position der Kopfplatte (15) mit der Schleifscheibe (5) ermittelt und/oder in eine definierte Stellposition bringbar ist.

6. Schleifanlage nach einem der Ansprüche 1 bis 5,
**dadurch gekennzeichnet,**
**dass** die Vorrichtung eine Magaziniereinheit (60) mit einem Magazin (62) von unbenutzten Schleifscheiben (6) aufweist,
**dass** an einer Aufnahmeposition eine unbenutzte Schleifscheibe (6) mit einer nach außen gerichteten Verbindungsseite aus dem Magazin (62) bereitgestellt ist und
**dass** durch Aufpressen der Kopfplatte (15) auf die Verbindungsseite der unbenutzten Schleifscheibe (6) diese mit der Kopfplatte (15) verbindbar ist.

7. Schleifanlage nach einem der Ansprüche 1 bis 6,
**dadurch gekennzeichnet,**
**dass** an dem Anschlagelement (25) und/oder der Magaziniereinheit (60) eine Sensoreinrichtung vorgesehen ist, mit welcher das Abnehmen beziehungsweise Aufnehmen der Schleifscheibe (5) überprüfbar ist.

8. Schleifanlage nach einem der Ansprüche 1 bis 7,
**dadurch gekennzeichnet,**
**dass** ein Schleifroboter mit einem bewegbaren Arm (11) vorgesehen ist, an dem die Schleifmaschine (10) angeordnet ist.

9. Schleifanlage nach einem der Ansprüche 1 bis 8,
**dadurch gekennzeichnet,**
**dass** die Kopfplatte (15) eine Adapterplatte (16) aufweist, an welcher die mindestens eine Ausnehmung (18) ausgebildet ist, und
**dass** die Adapterplatte (16) auswechselbar an einem Grundkörper (17) der Kopfplatte (15) gehaltert ist.

10. Schleifanlage nach Anspruch 9,
**dadurch gekennzeichnet,**
**dass** an der Adapterplatte (16) eine Klettschicht zum lösbaren Befestigen der Schleifscheibe (5) angeordnet ist.

11. Verfahren zum Austauschen einer Schleifscheibe (5), welche an einer Kopfplatte (15) einer Schleifmaschine (10) lösbar angebracht ist,
- bei dem die Kopfplatte (15) mit der Schleifscheibe (5) in eine Abnahmeposition bewegt wird, in welcher die Schleifscheibe (5) an ein Anschlagelement (25) angrenzt,
**dadurch gekennzeichnet,**
- **dass** in der Abnahmeposition mindestens ein Abnahmefinger (31) von einer Rückzugsposition in eine Eingriffsposition bewegt wird, in welcher er in eine Ausnehmung (18) an der Kopfplatte (15) eingreift und damit die Schleifscheibe (5) hintergreift, wobei die Ausnehmung (18) einen Eingriffshohlraum zwischen der Schleifscheibe (5) und der Kopfplatte (15) bildet,
- **dass** mit einer Spanneinrichtung (30) der mindestens eine Abnahmefinger (31) relativ zum Anschlagelement (25) so verschoben wird, dass der Abnahmefinger (31) an der Rückseite der Schleifscheibe (5) zur Anlage kommt und die Schleifscheibe (5) am Anschlagelement (25) festspannt,
- **dass** die Kopfplatte (15) von dem Anschlagelement (25) fortbewegt wird, wobei die Schleifscheibe (5) am Anschlagelement (25) gehalten wird.

12. Verfahren nach Anspruch 11,
**dadurch gekennzeichnet,**
**dass** das Fortbewegen der Kopfplatte (15) von dem Anschlagelement (25) als eine Kippbewegung erfolgt, bei welcher verschiedene Kontaktbereiche zwischen der Kopfplatte (15) und der benutzten Schleifscheibe (5) nacheinander gelöst werden.

## Claims

1. Grinding installation
with a grinding machine (10) having a head plate (15) which is driven in a rotating and/or oscillating manner and is designed for receiving and releasably holding a grinding disk (5), and
with a device for replacing the grinding disk (5), wherein the device has a stop element (25), against which the head plate (15) with the grinding disk (5) can be placed in a removal position,
**characterized in that**
- on an outer edge of the head plate (15) at least one recess (18) is provided, which, for the purpose of engaging behind the grinding disk (5), forms an engaging hollow space between the grinding disk (5) and the head plate (15),
- the device has at least one removal finger (31) which is adjustable between a retracted position and an engaged position, in which the removal finger (31) engages into one of the at least one recess (18) on the head plate (15) in the removal position, and
- the device has a clamping means (30), through which the at least one removal finger (31) is displaceable relative to the stop element (25), wherein the removal finger (31), for the purpose of releasing the grinding disk (5), comes to rest against its rear side and clamps the grinding disk (5) on the stop element (25).

2. Grinding installation according to claim 1,
**characterized in that**
several removal fingers (31) are distributed at least across a section of the circumference of the stop element (25).

3. Grinding installation according to claim 1 or 2,
**characterized in that**
below the stop element (25) a collecting container (40) is arranged for collecting the released grinding disk (5).

4. Grinding installation according to any one of claims 1 to 3,
**characterized in that**
the device has an alignment unit (20), with which a rotational alignment of the head plate (15) relative to the at least one removal finger (31) can be determined.

5. Grinding installation according to claim 4,
**characterized in that**
the alignment unit (20) has at least one position sensor (21), through which a position of the head plate (15) with the grinding disk (5) can be detected and/or brought into a defined set position.

6. Grinding installation according to any one of claims 1 to 5,
**characterized in that**
the device has a storage unit (60) with a store (62) of unused grinding disks (6), in a receiving position an unused grinding disk (6) with an outwardly directed connecting side is made available from the store (62) and
by pressing the head plate (15) onto the connecting side of the unused grinding disk (6) the latter can be connected to the head plate (15).

7. Grinding installation according to any one of claims 1 to 6,
**characterized in that**
on the stop element (25) and/or the storage unit (60) a sensor means is provided, with which the removal or reception of the grinding disk (5) can be verified.

8. Grinding installation according to any one of claims 1 to 7,
**characterized in that**
a grinding robot with a movable arm (11) is provided, on which the grinding machine (10) is arranged.

9. Grinding installation according to any one of claims 1 to 8,
**characterized in that**
the head plate (15) has an adapter plate (16), on which the at least one recess (18) is designed, and
the adapter plate (16) is supported in an exchangeable manner on a base body (17) of the head plate (15).

10. Grinding installation according to claim 9,
**characterized in that**
on the adapter plate (16) a hook-and-loop layer is arranged for releasably fastening the grinding disk (5).

11. Method for replacing a grinding disk (5) which is releasably fixed on a head plate (15) of a grinding machine (10),
- in which the head plate (15) with the grinding disk (5) is moved into a removal position, in which the grinding disk (5) abuts a stop element (25),
**characterized in that**
- in the removal position at least one removal finger (31) is moved from a retracted position into an engaged position, in which it engages into a recess (18) on the head plate (15) and thereby engages behind the grinding disk (5), wherein the recess (18) forms an engaging hollow space between the grinding disk (5) and the head plate (15),
- by way of a clamping means (30) the at least one removal finger (31) is displaced relative to the stop element (25) such that the removal finger (31) comes to rest against the rear side of the grinding disk (5) and clamps the grinding disk (5) on the stop element (25),
- the head plate (15) is moved away from the stop element (25), with the grinding disk (5) being held on the stop element (25).

12. Method according to claim 11,
**characterized in that**
the movement of the head plate (15) away from the stop element (25) is effected as a tilting movement, through which different contact areas between the head plate (15) and the used grinding disk (5) are released successively.

## Revendications

1. Installation de meulage,
avec une machine de meulage (10), qui comprend un plateau supérieur (15) entraîné en rotation et/ou en oscillation, qui est agencé pour recevoir et maintenir de manière amovible une meule (5), et
avec un dispositif pour le remplacement de la meule (5), dans lequel le dispositif comprend un élément de butée (25), sur lequel le plateau supérieur (15) avec la meule (5) peut être appliqué dans une position de retrait,
**caractérisée en ce que** :
- sur un bord extérieur du plateau supérieur (15), il est prévu au moins un évidement (18), qui, pour venir en prise avec l'arrière de la meule (5), forme une cavité d'engagement entre la meule (5) et le plateau supérieur (15),
- le dispositif comprend au moins un doigt de retrait (31), qui est réglable entre une position rétractée et une position engagée dans laquelle le doigt de retrait (31) s'engage, dans la position de retrait, dans l'un des au moins un évidement (18) sur le plateau supérieur (15), et
- le dispositif comprend un organe de serrage (30), au moyen duquel le au moins un doigt de retrait (31) est déplaçable par rapport à l'élément de butée (25) et dans lequel le doigt de retrait (31) vient en appui, pour l'enlèvement de la meule (5), sur le côté arrière de celle-ci et maintient la meule (5) par serrage contre l'élément de butée (25).

2. Installation de meulage selon la revendication 1,
**caractérisée :**
**en ce que** plusieurs doigts de retrait (31) sont disposés en étant répartis au moins sur une partie de la périphérie de l'élément de butée (25).

3. Installation de meulage selon la revendication 1 ou 2,
**caractérisée :**
**en ce qu'**au-dessous de l'élément de butée (25), un réceptacle de collecte (40) est disposé pour la réception de la meule (5) libérée.

4. Installation de meulage selon une des revendications 1 à 3,
**caractérisée :**
**en ce que** le dispositif comprend une unité de réglage (20), avec laquelle une orientation en rotation du plateau supérieur (15) par rapport à le au moins un doigt de retrait (31) peut être déterminée.

5. Installation de meulage selon la revendication 4,
**caractérisée :**
**en ce que** l'unité de réglage (20) comprend au moins un capteur de position (21),
au moyen duquel une position du plateau supérieur (15) avec la meule (5) est déterminée et/ou peut être amenée dans une position de réglage définie.

6. Installation de meulage selon une des revendications 1 à 5,
**caractérisée :**
**en ce que** le dispositif comprend une unité de stockage (60) avec un magasin (62) destiné aux meules non utilisées (6),
**en ce que**, dans une position de réception, une meule non utilisée (6) est présentée en provenance du magasin (62) avec un côté de liaison dirigé vers l'extérieur, et
**en ce que**, par pression du plateau supérieur (15) sur le côté de liaison de la meule non utilisée (6), celle-ci peut être fixée au plateau supérieur (15).

7. Installation de meulage selon une des revendications 1 à 6,
**caractérisée :**
**en ce qu'**au niveau de l'élément de butée (25) et/ou de l'unité de stockage (60), il est prévu un organe capteur avec lequel le retrait ou respectivement la mise en place de la meule (5) peut être contrôlé(e).

8. Installation de meulage selon une des revendications 1 à 7,
**caractérisée :**
**en ce qu'**il est prévu un robot de meulage avec un bras mobile (11), sur lequel la machine de meulage (10) est disposée.

9. Installation de meulage selon une des revendications 1 à 8,
**caractérisée :**
**en ce que** le plateau supérieur (15) comprend une plaque d'adaptation (16), sur laquelle le au moins un évidement (18) est formé, et
**en ce que** la plaque d'adaptation (16) est fixée de manière interchangeable sur un corps de base (17) du plateau supérieur (15).

10. Installation de meulage selon la revendication 9,
**caractérisée :**
**en ce qu'**une couche auto-agrippante est disposée sur la plaque d'adaptation (16) pour une fixation amovible de la meule (5).

11. Procédé de remplacement d'une meule (5), qui est appliquée de manière amovible contre un plateau supérieur (15) d'une machine de meulage (10),
- selon lequel le plateau supérieur (15) avec la meule (5) est déplacé dans une position de retrait, dans laquelle la meule (5) jouxte un élément de butée (25),
**caractérisé :**
- **en ce que**, dans la position de retrait, au moins un doigt de retrait (31) est déplacé d'une position rétractée vers une position d'engagement dans laquelle il s'engage dans un évidement (18) sur le plateau supérieur (15) et, ainsi vient en prise avec l'arrière de la meule (5), l'évidement (18) formant ainsi une cavité d'engagement entre la meule (5) et le plateau supérieur (15),
- **en ce qu'**avec un organe de serrage (30), le au moins un doigt de retrait (31) est déplacé par rapport à l'élément de butée (25) de telle manière que le doigt de retrait (31) vient en appui sur le côté arrière de la meule (5) et serre la meule (5) contre l'élément de butée (25),
- **en ce que** le plateau supérieur (15) est déplacé par rapport à l'élément de butée (25), la meule (5) étant alors maintenue contre l'élément de butée (25).

12. Procédé selon la revendication 11,
**caractérisé :**
**en ce que** le déplacement du plateau supérieur (15) par rapport à l'élément de butée (25) est effectué en tant que mouvement de basculement, au cours duquel différentes zones de contact entre le plateau supérieur (15) et la meule (5) utilisée sont successivement libérées.
